(19) **Europäisches Patentamt**
**European Patent Office**
**Office européen des brevets**

(11) **EP 4 723 023 A1**

(12) **EUROPEAN PATENT APPLICATION**
published in accordance with Art. 153(4) EPC

(43) Date of publication:
08.04.2026 Bulletin 2026/15

(21) Application number: 23939547.8

(22) Date of filing: 29.05.2023

(51) International Patent Classification (IPC):
*G06Q 50/10* *(2012.01)*

(52) Cooperative Patent Classification (CPC):
G06Q 50/10

(86) International application number:
PCT/JP2023/019983

(87) International publication number:
WO 2024/247068 (05.12.2024 Gazette 2024/49)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED
Kawasaki-shi, Kanagawa 211-8588 (JP)**

(72) Inventors:
• **KIKUCHI, Takashi
Kawasaki-shi, Kanagawa 211-8588 (JP)**
• **KOHATA, Shun
Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **GENERATION PROGRAM, INFERENCE PROGRAM, GENERATION METHOD, AND INFORMATION PROCESSING DEVICE**

(57)    A generation program causing a computer to execute a process including acquiring a video obtained by imaging an area including a product shelf on which products are arranged, specifying an action of a person holding the product by analyzing the acquired video, specifying an image frame including a product stored on the product shelf and a product held by the person from a plurality of image frames that form the acquired video based on the specified action of the person holding the product, and generating a machine training model trained to identify a person performing an action of taking out the product from the product shelf using the specified image frame.

FIG.17

ACTION: HOLD(Hold)

TYPE OF PRODUCT:
Book

Person1: {x1,y1,x2,y2}
Book1: {x1',y1',x2',y2'}
Action: {Person1,Book1,'Hold'}

GENERATE TRAINING DATA

## Description

Technical Field

The present invention relates to a generation program, an inference program, a generation method, and an information processing apparatus.

Background Art

When a specific action of a customer on an object such as a product can be detected in a store, the action can be utilized for analysis of a purchase trend. For example, the action in which a customer acquires a product from a product shelf is one visible action that indicates purchase intention of the customer.

Hereinafter, techniques 1 and 2 of the related arts for detecting an action of a customer on an object will be described.

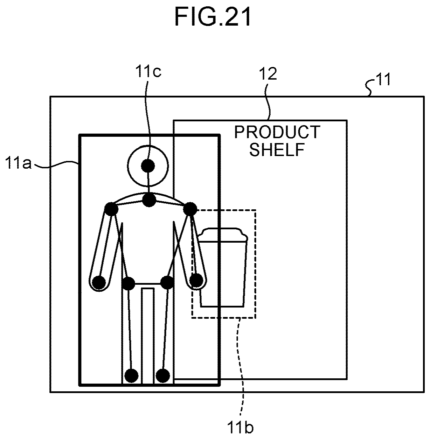

The technique 1 of the related art will be described. FIG. 21 is a diagram illustrating the technique 1 of the related art. Here, a device that executes the technique 1 of the related art is referred to as a "device A of the related art". The device A of the related art estimates a relationship between a person and an object based on a rule.

As illustrated in FIG. 21, for example, the device A of the related art specifies a region 11a of a person and a region 11b of an object by analyzing video data 11 captured by a camera. The device A of the related art specifies skeleton information 11c of a person by analyzing the region 11a of the person. Coordinate information of each joint of the person is set in the skeleton information 11c. By using the skeleton information 11c, coordinates of a part such as a hand of the person can be specified.

The device A of the related art detects an action of a person holding an object when a hand of the person enters a product shelf 12, detects an object from the product shelf 12, and sequentially specifies that the hand of the person is touching the object based on a detection rule set in advance.

In the technique 1 of the related art, in order to improve detection accuracy, a detailed detection rule is set according to the arrangement of the camera and the direction of the person.

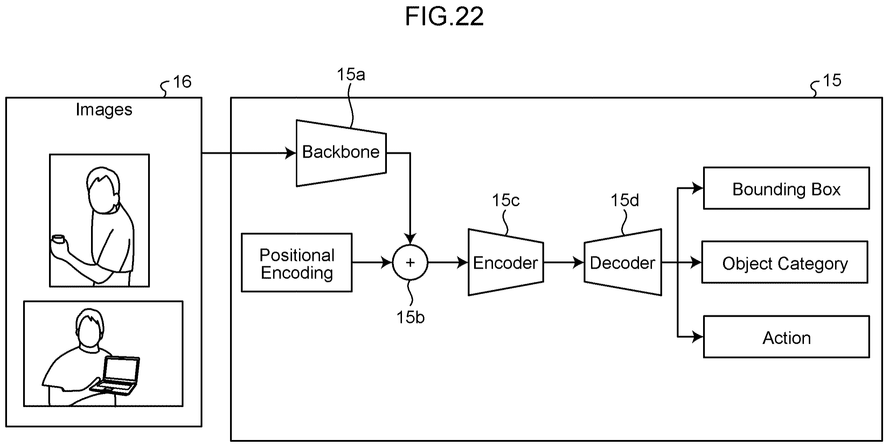

The technique 2 of the related art will be described. FIG. 22 is a diagram illustrating the technique 2 of the related art. Here, a device that executes the technique 2 of the related art is referred to as a "device B of the related art". The device B of the related art uses a human-object interaction detection (HOID). For example, the HOID is a transformer-based machine training model.

In the example illustrated in FIG. 22, the device B of the related art uses a machine training model 15. The device B of the related art outputs a region of a person, a region of an object, and an action of the person on the object by inputting image data 16 to the machine training model 15.

The machine training model 15 includes a backbone 15a, an adder 15b, an encoder 15c, and a decoder 15d. When the image data 16 is input, the backbone 15a outputs a feature of the image data 16. For example, the device B of the related art divides the image data 16 into a plurality of blocks, and inputs the divided blocks to the backbone 15a.

A result of positional encoding on the image data 16 and an output result of the backbone 15a are input to the adder 15b. The adder 15b outputs a result obtained by adding the result of the positional encoding and the output result of the backbone 15a to the encoder 15c. In the positional encoding, a process of encoding each piece of position information of the divided image data 16 is executed.

The encoder 15c converts data input from the adder 15b into vector data and inputs the converted vector data to the decoder 15d. When the vector data is input, the decoder 15d outputs data of a bounding box, data of an object category, and data of an action. The data of the bounding box indicates a region of a person, a region of an object, and the like included in the image data 16. The data of the object category indicates an attribute of a region indicated in each bounding box. The attributes include a person and an object. The data of the action indicates an action of the person on the object.

In the technique 2 of the related art, it is possible to train the machine training model 15 using training data for defining a relationship between input data and a correct answer label without setting a detailed detection rule as in the technique 1 of the related art. In the technique 2 of the related art, by inputting image data, it is possible to specify a region of a person, a region of an object, and an action of the person on the object at a time.

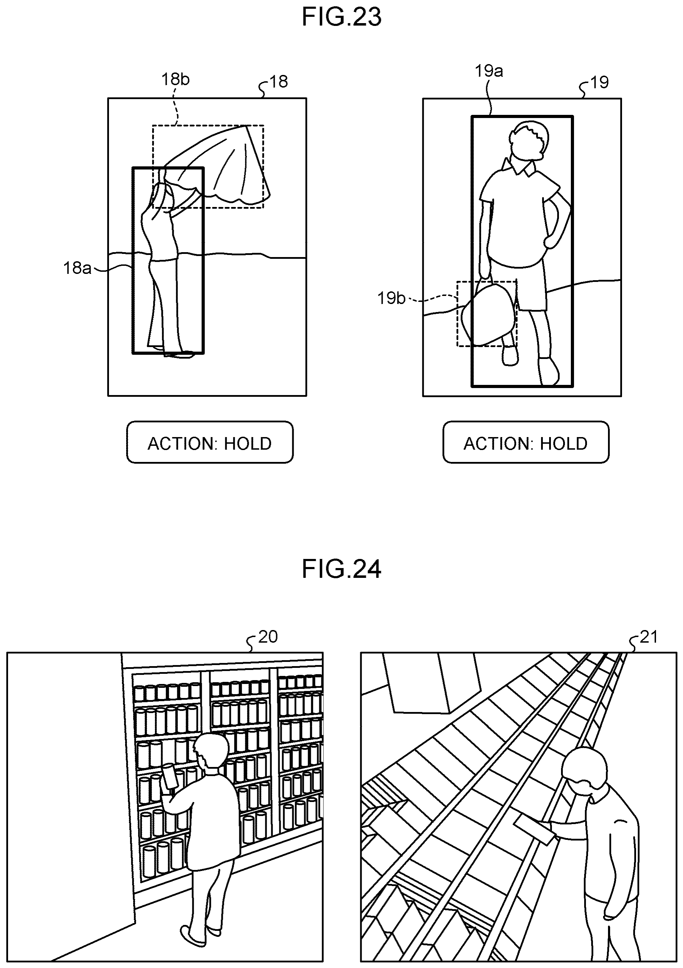

FIG. 23 is a diagram illustrating an example of a processing result of the technique 2 of the related art. For example, the device B of the related art inputs image data 18 to the machine training model 15 to output a region 18a of the person, a region 18b of the object, and an action "holding". By inputting the image data 19 to the machine training model 15, the device B of the related art outputs a region 19a of a person, a region 19b of an object, and an action "holding".

Citation List

Patent Literature

Patent Literature 1: Japanese Laid-open Patent Publication No. 2018-15408

Summary of invention

Technical Problem

However, in the above-described technique 2 of the related art, in a case where there are many similar objects or in a scene where an object is included in many backgrounds as in a product shelf of a store, it is not possible to accurately estimate on which object an action of the person is performed.
FIG. 24 is a diagram illustrating an example of image data in which estimation accuracy of the technique 2 of the related art deteriorates. For example, image data 20 includes many similar products, and it is difficult to estimate on which object the action of the person is performed according to the technique 2 of the related art. In an image data 21, many objects are included in the background. Similarly, it is difficult to estimate on which object the action of the person is performed according to the technique 2 of the related art.
Even in a case where an action of a person holding an object is detected based on a detection rule as in the technique 1 of the related art, the detection accuracy deteriorates if many similar products are included as in the image data 20 and 21 of FIG. 24.
Therefore, it is needed to generate a machine training model that accurately estimates on which object an action of a person is performed with respect to image data including many similar objects.
According to an aspect, an object of the present invention is to provide a generation program, an inference program, a generation method, and an information processing apparatus capable of generating a machine training model that accurately estimates on which object an action of a person is performed with respect to image data including many similar objects.

Solution to Problem

According to an aspect of an embodiment, a generation program causing a computer to execute a process includes acquiring a video obtained by imaging an area including a product shelf on which products are arranged, specifying an action of a person holding the product by analyzing the acquired video, specifying an image frame including a product stored on the product shelf and a product held by the person from a plurality of image frames that form the acquired video based on the specified action of the person holding the product, and generating a machine training model trained to identify a person performing an action of taking out the product from the product shelf using the specified image frame.

Advantageous Effects of Invention

The present invention can generate a machine training model that accurately estimates on which object an action of a person is performed with respect to image data including many similar objects.

Brief Description of Drawings

FIG. 1 is a diagram illustrating an example of a system according to a first embodiment.
FIG. 2 is a diagram illustrating a machine training model.
FIG. 3 is a diagram illustrating training data.
FIG. 4 is a diagram illustrating a process in which an information processing apparatus generates combined image data.
FIG. 5 is a diagram illustrating target training executed by the information processing apparatus.
FIG. 6 is a diagram illustrating machine training executed by the information processing apparatus.
FIG. 7 is a diagram illustrating a process of an inference phase in the first embodiment.
FIG. 8 is a functional block diagram illustrating a configuration of the information processing apparatus according to the first embodiment.
FIG. 9 is a diagram illustrating an example of a data structure of a training data table.
FIG. 10 is a flowchart illustrating a processing procedure of the information processing apparatus according to the first embodiment.
FIG. 11 is a diagram illustrating a result of accuracy evaluation.

FIG. 12 is a diagram illustrating an extension example of annotation data.

FIG. 13 is a diagram illustrating another process of generating combined image data.

FIG. 14 is a diagram illustrating an example of a skeleton model of a human body.

FIG. 15 is a diagram illustrating examples of joint names.

FIG. 16 is a diagram illustrating an example of a system according to a second embodiment.

FIG. 17 is a diagram illustrating a process of an information processing apparatus according to the second embodiment.

FIG. 18 is a functional block diagram illustrating a configuration of the information processing apparatus according to the second embodiment.

FIG. 19 is a flowchart illustrating a processing procedure of the information processing apparatus according to the second embodiment.

FIG. 20 is a diagram illustrating an example of a hardware configuration of a computer that implements functions similar to those of the information processing apparatus according to an embodiment.

FIG. 21 is a diagram illustrating a technique 1 of the related art.

FIG. 22 is a diagram illustrating a technique 2 of the related art.

FIG. 23 is a diagram illustrating an example of a processing result of the technique 2 of the related art.

FIG. 24 is a diagram illustrating an example of image data in which estimation accuracy of the technique 2 of the related art deteriorates.

Description of Embodiments

Hereinafter, embodiments of a generation program, an inference program, a generation method, and an information processing apparatus disclosed in the present application will be described in detail with reference to the drawings. The present invention is not limited by these embodiments.

(First Embodiment)

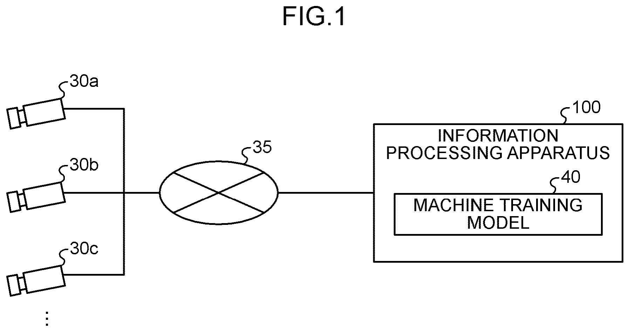

FIG. 1 is a diagram illustrating an example of a system according to a first embodiment. As illustrated in FIG. 1, the system includes cameras 30a, 30b, and 30c and an information processing apparatus 100. The cameras 30a to 30c and the information processing apparatus 100 are connected to each other via a network 35.

The cameras 30a to 30c are installed in a store that has product shelves in which products are stored. The cameras 30a to 30c capture videos including the product shelves installed in a store, and transmit data of the captured videos to the information processing apparatus 100. In the following description, the data of the videos is referred to as "video data". The video data includes time-series image data (still images). The cameras 30a to 30c are collectively referred to as the "cameras 30".

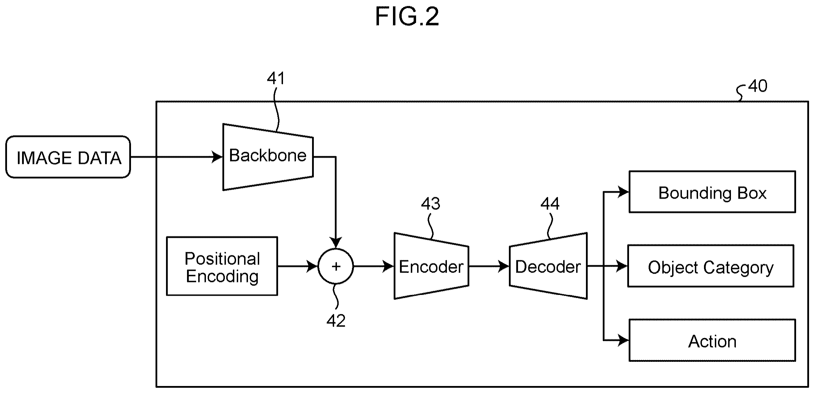

The information processing apparatus 100 executes various types of processes using a machine training model 40. FIG. 2 is a diagram illustrating a machine training model. As illustrated in FIG. 2, the machine training model 40 includes a backbone 41, an adder 42, an encoder 43, and a decoder 44. When image data is input, the backbone 41 outputs a feature of the image data. For example, the information processing apparatus 100 divides the image data into a plurality of blocks and inputs the divided blocks to the backbone 41. Although not described below, the image data input to the backbone 41 is divided and input to the backbone 41.

A result of the positional encoding on the image data and an output result of the backbone 41 are input to the adder 42. The adder 42 outputs a result obtained by adding the result of the positional encoding and the output result of the backbone 41 to the encoder 43. In the positional encoding, the information processing apparatus 100 executes a process of encoding each piece of position information of the divided image data when the image data is input to the backbone 41.

The encoder 43 converts the data input from the adder 42 into vector data, and inputs the vector data to the decoder 44. When the vector data is input, the decoder 44 outputs data of a bounding box, data of an object category, and data of an action. The data of the bounding box indicates a region of a person, a region of an object, and the like included in the image data. The data of the object category indicates an attribute of a region indicated in each bounding box. The attributes include a person and an object. The data of the action indicates an action of a person on an object. For example, the information processing apparatus 100 can specify a region of a person and a region of an object in image data by using the data of the bounding box and the data of the object category.

The information processing apparatus 100 executes a process of generating combined image data, a process in a training phase, and a process in an inference phase. Hereinafter, the process of generating the combined image data, the process in the training phase, and the process in the inference phase will be sequentially described.

First, a process in which the information processing apparatus 100 generates combined image data will be described. The information processing apparatus 100 generates combined image data based on the training data.

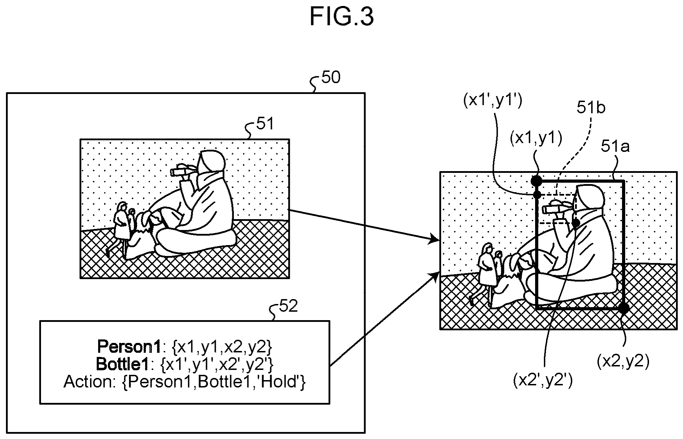

FIG. 3 is a diagram illustrating training data. As illustrated in FIG. 3, the training data 50 includes image data 51 and annotation data 52. For example, the image data 51 includes an image of a person and an image of an object. The input data in a case of training of the machine training model 40 corresponds to the image data 51 and a correct answer label corresponds to the annotation data 52.

The annotation data 52 includes data of the region of the person, data of the region of the object, and data of the action of the person on the object. In the example illustrated in FIG. 3, the data of the region of the person is "Person1: {x1, y1, x2, y2}". This indicates that the coordinates of an upper left end of a region 51a of the person are "x1, y1" and the coordinates of a lower right end of a region 51a of the person are "x2, y2".

Data of the region of the object (bottle) is "Bottle1: {x1', y1', x2', y2'}". This indicates that the coordinates of an upper left end of the region 51b of the object are "x1', y1'" and the coordinates of a lower right end of the object region 51b of the object are "x2', y2'".

The data of the action of the person on the object is "Action: {Person1, Bottle1, Hold}". This indicates that the person of the region 51a holds the object (bottle) of the region 51b.

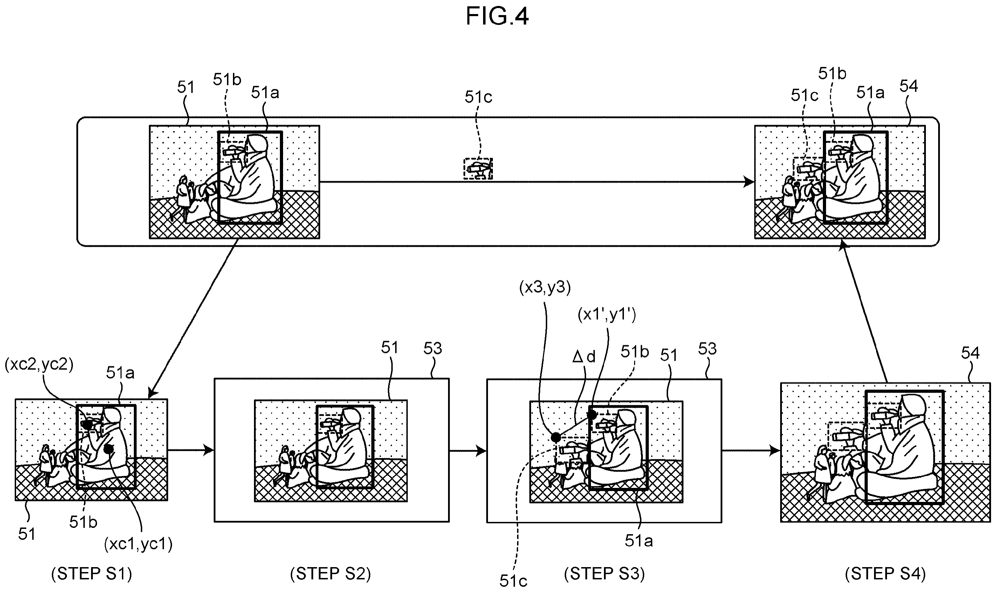

The information processing apparatus 100 generates combined image data using the training data 50 illustrated in FIG. 3. FIG. 4 is a diagram illustrating a process in which the information processing apparatus generates combined image data. The information processing apparatus 100 extracts the region 51a of the person and the region 51b of the object included in the image data 51 based on the annotation data 52 included in the training data 50. The information processing apparatus 100 generates the combined image data 54 by executing processes of steps S1 to S4. As described below, the information processing apparatus 100 combines an image 51c with the image data 51 to generate combined image data 54.

Step S1 will be described. The information processing apparatus 100 specifies center coordinates (xc1, yc1) of the region 51a of the person. The information processing apparatus 100 specifies center coordinates (xc2, yc2) of the region 51b of the object. The information processing apparatus specifies a combination direction from a positional relationship between the center coordinates (xc1, yc1) and the center coordinates (xc2, yc2). The combination direction indicates whether the image 51c is combined on a "left side" with the region 51a of the person or the image 51c is combined on the "right side" with the region 51a of the person.

In the case of "xc1-xc2<0", the information processing apparatus 100 determines that the combination direction is the "left side". In the case of "xc1-xc2≥0", the information processing apparatus 100 determines that the combination direction is the "right side". In the example illustrated in FIG. 4, since "xc1-xc2<0", the combination direction is the "left side".

Step S2 will be described. The information processing apparatus 100 generates the image data 53 by generating a margin around the image data 51.

Step S3 will be described. The information processing apparatus 100 copies an image of the region 51b of the object included in the image data 51. Since the combination direction determined in step S1 is the "left side", the information processing apparatus 100 arranges the copied image 51c in a region that is on the left side of the region 51a of the person and does not overlap the region 51a. Further, the information processing apparatus 100 adjusts the coordinates of the image 51c so that a distance $\Delta d$ between the coordinates (x1', y1') of the upper left corner of the region 51b of the object and coordinates (x3, y3) of the upper left corner of the arranged image 51c becomes a preset hyperparameter.

Step S4 will be described. The information processing apparatus 100 generates the combined image data 54 by deleting the margin of the image data 53. In the example illustrated in FIG. 4, the case where the image 51c is included in the range of the image data 51 has been described, but a part of the image 51c may be included in the margin of the image data 53 according to the process of step S3. When the part of the image 51c is included in the margin of the image data 53, the part included in the margin, which is a part of the image 51c, is deleted through the process of step S4.

As described with reference to FIG. 4, the information processing apparatus 100 generates the combined image data 54 obtained by combining the image data 51 and the image 51c by executing the processes of steps S1 to S4.

The information processing apparatus 100 generates a plurality of pieces of combined image data by repeatedly executing the above-described processes with reference to FIG. 4 on training data other than the training data 50 described with reference to FIG. 3.

Next, a process in the training phase executed by the information processing apparatus 100 will be described. For example, the information processing apparatus 100 executes contrast training on the machine training model 40 using the image data and the combined image data, and executes machine training on the machine training model 40 using the training data.

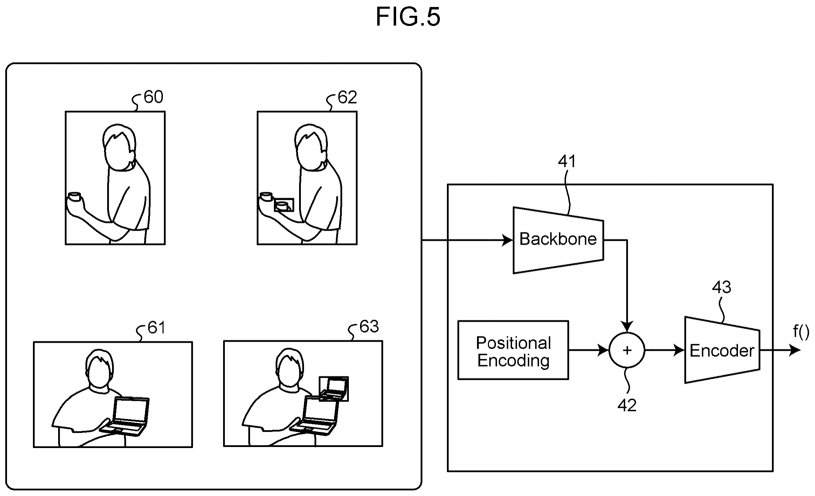

The contrast training executed by the information processing apparatus 100 will be described. FIG. 5 is a diagram illustrating contrast training executed by the information processing apparatus. In FIG. 5, to facilitate description, pieces of image data 60 and 61 and pieces of combined image data 62 and 63 are used for description. The pieces of image data 60 and 61 are image data included in the training data. The pieces of image data 60 and 61 have a common feature in that a person holds an object.

The combined image data 62 is combined image data generated by executing the process described with reference to FIG. 4 using the image data 60. The combined image data 63 is combined image data generated by executing the process described with reference to FIG. 4 using the image data 61. The pieces of combined image data 61 and 63 have a common feature in that a person holds an object and another object is arranged near the person.

In the following description, the pieces of image data 60 and 61 and the image data including the image of the object and the image of the person holding the object will be appropriately referred to as "positive examples". The combined image data obtained by executing the process described in FIG. 4 will be appropriately referred to as a "negative example". As described above, the positive examples have the common feature, and the negative examples also have the common feature. In the contrast training executed by the information processing apparatus 100, the encoder 43 is trained so that outputs from the encoder 43 during inputting of two positive examples become close. The information processing apparatus 100 trains the encoder 43 so that outputs from the encoder 43 during inputting of two negative examples become close.

Since the pair of positive and negative examples do not have a common feature, the information processing apparatus 100 trains the encoder 43 so that outputs from the encoder 43 during inputting of the positive and negative examples become farther.

The information processing apparatus 100 obtains an output f() from the encoder 43 by inputting the pieces of image data 60 and 61 and the pieces of combined image data 62 and 63 to the backbone 41 of the machine training model 40. For example, f() is vector data.

For example, the information processing apparatus 100 calculates an error (a cross entropy error of cosine similarity) between an output f() during inputting of a positive or negative example to the backbone 41 and an output f() during inputting of the other positive or negative example to the backbone 41 by Formula (1).

$$Ls = -\frac{1}{N}\sum_{i}^{N}\log l^{x_i \cdot x_j} \qquad \cdots (1)$$

$l^{x_i, x_j}$ indicated in Formula (1) is calculated by Formula (2). f() indicated in Formula (2) is an output from the encoder 43 described above. g() is cosine similarity.

$$l^{x_i \cdot x_j} = \frac{e^{f\left(g(x_i), g(x_j)\right)/\tau}}{\sum_{k=1m\ k \neq i}^{\alpha N} e^{g(g(x_i), g(x_k))/\tau}} \qquad \cdots (2)$$

For example, an output from the encoder 43 obtained by inputting the image data 60 to the backbone 41 is written as $f_{60}()$. An output from the encoder 43 obtained by inputting the image data 61 to the backbone 41 is written as $f_{61}()$. An output from the encoder 43 obtained by inputting the image data 62 to the backbone 41 is written as $f_{62}()$. An output from the encoder 43 obtained by inputting the image data 63 to the backbone 41 is written as $f_{63}()$.

The value of the cross entropy error decreases as f() output from the encoder 43 by inputting the positive example to the backbone 41 and f() output from the encoder 43 by inputting the other positive example to the backbone 41 become close to each other. For example, the information processing apparatus 100 trains parameters of the encoder 43 so that $f_{60}()$ and the value of $f_{61}()$ become close to each other.

The value of the cross entropy error decreases as f() output from the encoder 43 by inputting the negative example to the backbone 41 and f() output from the encoder 43 by inputting the other negative example to the backbone 41 become close to each other. For example, the information processing apparatus 100 trains the parameters of the encoder 43 so that $f_{62}()$ and $f_{63}()$ become close to each other.

The value of the cross entropy error decreases as f() output from the encoder 43 by inputting the positive example to the backbone 41 and f() output from the encoder 43 by inputting the negative example to the backbone 41 become farther. For example, the information processing apparatus 100 trains the parameters of the encoder 43 so that $f_{60}()$ and $f_{62}()$ become farther. The information processing apparatus 100 trains the parameters of the encoder 43 so that $f_{60}()$ and $f_{60}()$ become farther. The information processing apparatus 100 trains the parameters of the encoder 43 so that $f_{61}()$ and $f_{62}()$ become farther. The information processing apparatus 100 trains the parameters of the encoder 43 so that $f_{60}()$ and $f_{63}()$ become farther.

Here, the information processing apparatus 100 executes the machine training of the parameters of the encoder 43 and the decoder 44 of the machine training model 40 based on a back propagation method while executing the contrast training described in FIG. 5.

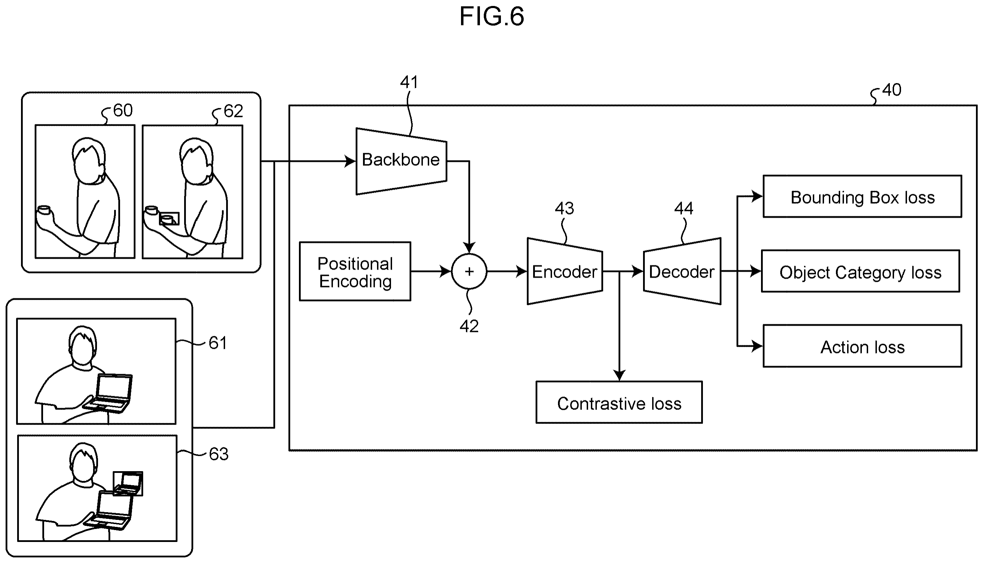

FIG. 6 is a diagram illustrating machine training executed by the information processing apparatus. The pieces of image data 60 and 61 are image data included in the training data, and correct answer labels (annotation data) corresponding to the pieces of image data 60 and 61 are set in advance. The combined image data 62 is generated based on the image data 60. The combined image data 63 is generated based on the training data 61.

For example, the information processing apparatus 100 acquires an output result from the decoder 44 by inputting the image data 60 to the backbone 41 of the machine training model 40. The information processing apparatus 100 compares the annotation data corresponding to the image data 60 with the output result from the decoder 44, and calculates a bounding box loss, an object category loss, and an action loss.

As described with reference to FIG. 5, the information processing apparatus 100 inputs a pair of positive and positive examples, a pair of negative and positive examples, or a pair of negative examples to the backbone 41 of the machine training model 40, and calculates a cross entropy error (contrastive loss) based on Formula (1).

The information processing apparatus 100 executes the machine training of the parameters of the encoder 43 and the decoder 44 of the machine training model 40 based on the back propagation method so that a total error obtained by adding the cross entropy error to the bounding box loss, the object category loss, and the action loss is reduced.

As described above, the information processing apparatus 100 according to the first embodiment extracts an image of an object used by the person from image data, and generates combined image data in which the extracted image is arranged near the person in the image data. The information processing apparatus 100 can generate the machine training model 40 that can identify a person who uses the object by executing the machine training of the machine training model 40 using the combined image data.

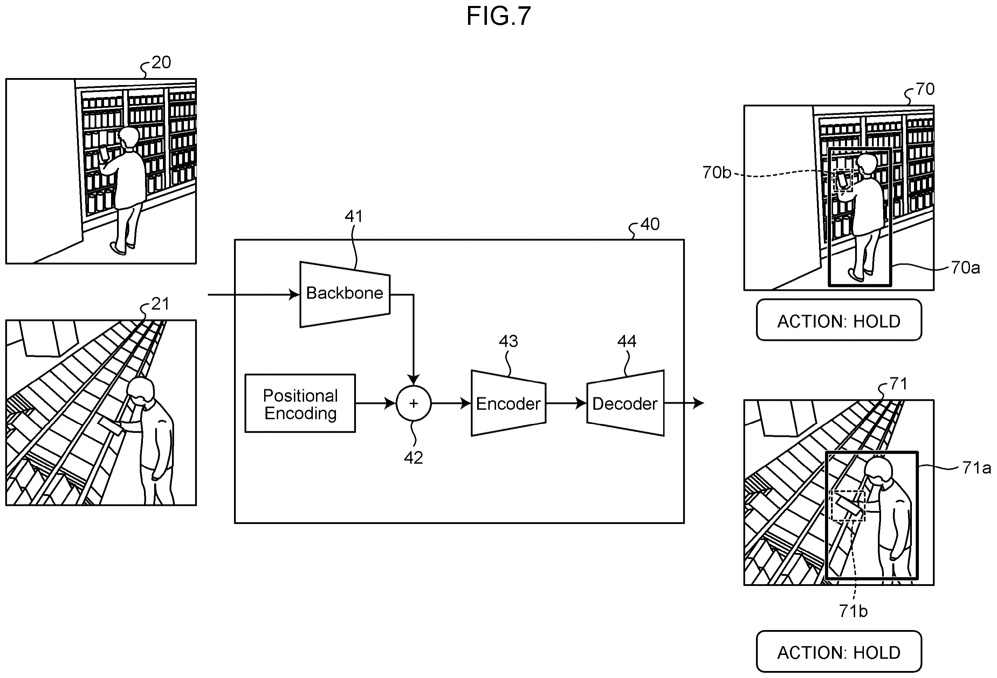

Next, a process in the inference phase of the information processing apparatus 100 will be described. FIG. 7 is a diagram illustrating a process in an inference phase in the first embodiment. The machine training model 40 is a machine training model trained through the process in the training phase as described above.

The information processing apparatus 100 obtains an output result 70 by inputting the image data 20 to the backbone 41 of the machine training model 40. In the output result 70, a region 70a of a person and a region 70b of an object are specified, and an action of the person "holding" the object is indicated. Although the image data 20 includes a plurality of similar products, it is possible to accurately estimate on which object the action of the person is performed.

The information processing apparatus 100 obtains an output result 71 by inputting the image data 21 to the backbone 41 of the machine training model 40. In the output result 71, a region 71a of the person and a region 71b of the object are specified, and the action of the person "holding" the object is indicated. In the image data 21, there are many objects in the background, but it is possible to accurately estimate on which object the action of the person is performed.

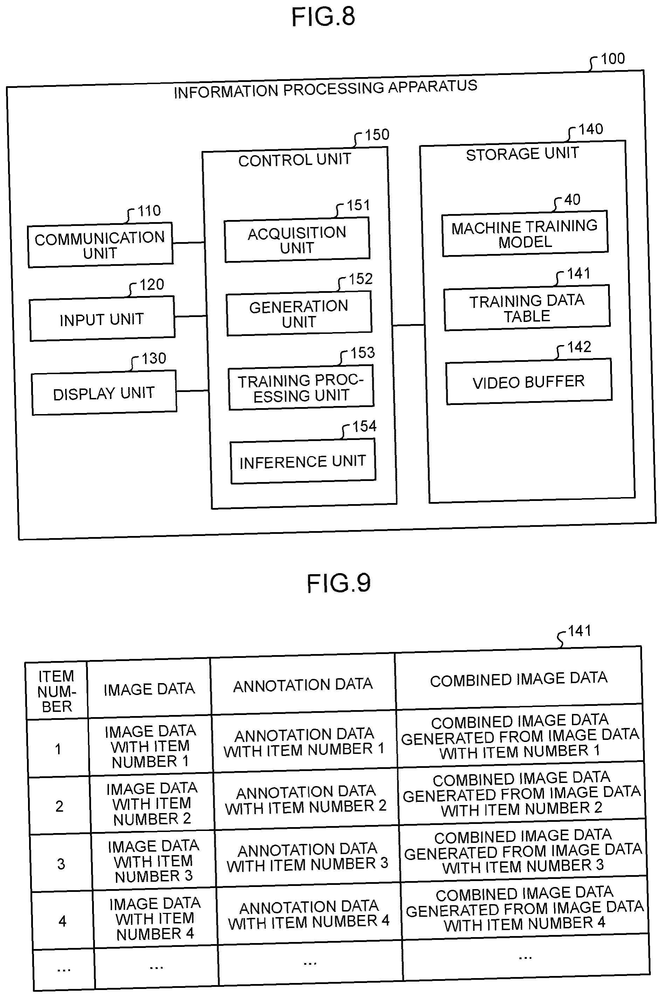

Next, a configuration example of the information processing apparatus 100 that executes the above-described process will be described. FIG. 8 is a functional block diagram illustrating a configuration of the information processing apparatus according to the first embodiment. As illustrated in FIG. 8, the information processing apparatus 100 includes a communication unit 110, an input unit 120, a display unit 130, a storage unit 140, and a control unit 150.

The communication unit 110 executes data communication with the camera 30, an external apparatus, or the like via the network 35. The communication unit 110 is a network interface card (NIC) or the like. For example, the communication unit 110 receives video data from the camera 30.

The input unit 120 inputs various types of information to the control unit 150 of the information processing apparatus 100. For example, the user may input a command to execute the process in the training phase and a command to execute the process in the inference phase by operating the input unit 120. The user may designate a hyperparameter described in FIG. 4 by operating the input unit 120.

The display unit 130 displays information output from the control unit 150.

The storage unit 140 includes the machine training model 40, a training data table 141, and a video buffer 142. The storage unit 140 is a storage device such as a memory.

The machine training model 40 is a transformer-based machine training model. For example, the machine training model 40 is an HOID. The description regarding the machine training model 40 is similar to the description regarding the machine training model 40 described in FIG. 2.

The training data table 141 is a table that retains a plurality of pieces of training data. FIG. 9 is a diagram illustrating an example of a data structure of the training data table. As illustrated in FIG. 9, the training data table 141 includes item numbers, image data, annotation data, and combined image data. The item number is a number for identifying each record of the training data table 141. The image data and the annotation data correspond to the image data and the annotation data included in the training data described in FIG. 3. The image data includes an image of a person and an image of an object such as a product. The combined image data is combined image data generated by executing the processing of FIG. 4. The combined image data is generated by a generation unit 152 to be described below.

The video buffer 142 is a buffer that stores video data captured by the camera 30. The video buffer 142 may store the identification information of the camera and the video data in association.

The description returns to FIG. 8. The control unit 150 includes an acquisition unit 151, a generation unit 152, a training processing unit 153, and an inference unit 154. The control unit 150 is a central processing unit (CPU), a graphics processing unit (GPU), or the like.

The acquisition unit 151 acquires the video data from the camera 30, and stores the acquired video data in the video buffer 142. The acquisition unit 151 may acquire data of the training data table 141 from an external apparatus or the like and store the data in the storage unit 140.

The generation unit 152 executes the process described with reference to FIG. 4 based on the image data included in the training data, and generates combined image data. The generation unit 152 stores the generated combined image data in the training data table 141. Hereinafter, an example of a process of the generation unit 152 will be described.

The generation unit 152 acquires a pair of image data and annotation data from the training data table 141. The generation unit 152 extracts a region of a person and a region of an object from the image data based on the annotation data.

The generation unit 152 duplicates an image of a region of an object included in the image data. As described in step S1 of FIG. 4, the generation unit 152 specifies the center coordinates of the region of the person and the center coordinates of the region of the object in the image data, and determines the combination direction of the duplicated images of the objects based on the center coordinates.

As described in step S2 of FIG. 4, the generation unit 152 generates a margin around the image data. As described in step S3 of FIG. 4, the generation unit 152 adjusts the coordinates of the duplicated image so that the distance $\Delta d$ between the coordinates of an upper left corner of the region of the object in the image data and the coordinates of the upper left corner of the duplicated image is the hyperparameter set in advance. As described in step S4 of FIG. 4, the generation unit 152 generates the combined image data by deleting the margin.

The training processing unit 153 trains the machine training model 40 using the training data table 141. For example, the training processing unit 153 executes the contrast training described with reference to FIG. 5 and the machine training described with reference to FIG. 6.

The training processing unit 153 acquires a pair of image data (positive example) and image data (positive example), a pair of image data (positive example) and combined image data (negative example), or a pair of combined image data (negative example) and combined image data (negative example) from the training data table 141.

The training processing unit 153 inputs a pair of positive and positive examples, a pair of positive and negative examples, or a pair of negative and negative examples to the backbone 41 of the machine training model 40, and calculates a cross entropy error (Contrastive loss) based on Formula (1).

The training processing unit 153 acquires the output result from the decoder 44 by inputting the positive example to the backbone 41 of the machine training model 40. The training processing unit 153 compares the annotation data corresponding to the image data with the output result from the decoder 44, and calculates a bounding box loss, an object category loss, and an action loss.

The training processing unit 153 executes the machine training of the parameters of the encoder 43 and the decoder 44 of the machine training model 40 based on the back propagation method so that the total error obtained by adding the cross entropy error to the bounding box loss, the object category loss, and the action loss is reduced.

The inference unit 154 infers on which object the action of the person is performed using the machine training model 40 trained by the training processing unit 153. The process of the inference unit 154 corresponds to the process described in FIG. 7.

For example, the inference unit 154 infers the region of the person, the region of the object, and the action of the person on the object by acquiring image data from the video buffer 142 and inputting the image data to the backbone 41 of the machine training model 40.

As described with reference to FIG. 1, the camera 30 is installed in a store that has a product shelf on which products are stored, and image data (video data) captured by the camera 30 includes a region of the product shelf. Therefore, the inference unit 154 can identify an action of a customer taking out the product from the product shelf by inputting the image data to the backbone 41 of the machine training model 40.

The inference unit 154 may output and display the inference result on the display unit 130. The inference unit 154 outputs, to the display unit 130, screen data in which the region of the person, the region of the object, and the action of the person on the object are arranged on the image data as the inference result.

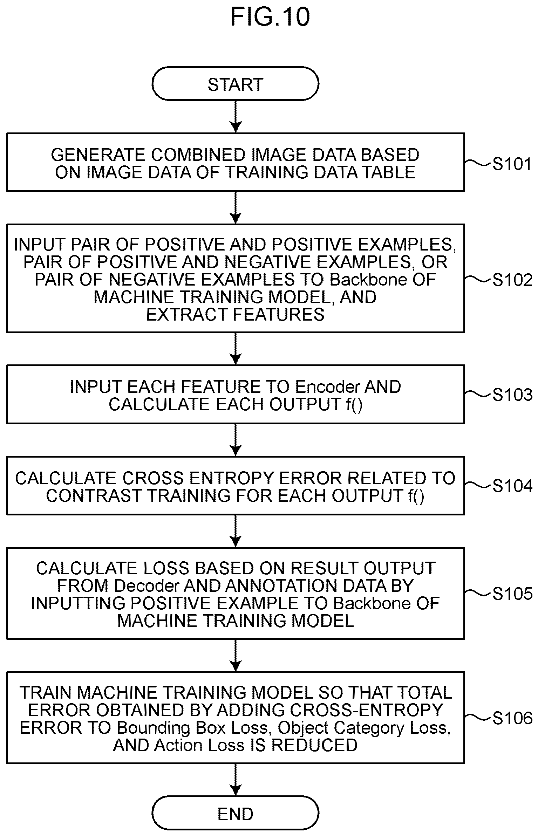

Next, an example of a processing procedure of the information processing apparatus 100 according to the first embodiment will be described. FIG. 10 is a flowchart illustrating a processing procedure of the information processing apparatus according to the first embodiment. As illustrated in FIG. 10, the generation unit 152 of the information processing apparatus 100 generates combined image data based on the image data of the training data table 141 (step S101).

The training processing unit 153 of the information processing apparatus 100 inputs a pair of positive and positive examples, a pair of positive and negative examples, or a pair of negative examples to the backbone 41 of the machine training model 40 and extracts each feature (step S102).

The training processing unit 153 inputs each feature to the encoder 43 and calculates each output f() (step S103). The training processing unit 153 calculates a cross entropy error related to the contrast training for each output f() (step S104).

The training processing unit 153 calculates a loss based on the result output from the decoder 44 and the annotation data by inputting the positive example to the backbone 41 of the machine training model 40 (step S105). The loss includes a bounding box loss, an object category loss, and an action loss.

The training processing unit 153 trains the machine training model 40 so that a total error obtained by adding the cross entropy error to the bounding box loss, the object category loss, and the action loss is reduced (step S106).

Next, effects of the information processing apparatus 100 according to the first embodiment will be described. The information processing apparatus 100 extracts an image of an object used by a person from the image data, and generates combined image data in which the extracted image is arranged near the person in the image data. The information processing apparatus 100 can generate the machine training model 40 that can identify a person who uses the object by executing the machine training of the machine training model 40 using the combined image data.

When the combined image data is generated, the information processing apparatus 100 receives a setting of the hyperparameter as described with reference to FIG. 4. Under the condition that the image 51c does not overlap the region 51a of the person, the information processing apparatus 100 arranges the image 51c so that the distance $\Delta d$ between the coordinates of an upper left corner of the region 51b of the object and the coordinates of an upper left corner of the arranged image 51c is a hyperparameter set in advance. Accordingly, it is possible to generate pseudo combined image data in which similar objects are included around the person holding an object.

In the contrast training, the information processing apparatus 100 trains the encoder 43 so that outputs from the encoder 43 during inputting of two positive examples become close. The information processing apparatus 100 trains the encoder 43 so that outputs from the encoder 43 during inputting of two negative examples become close. Since the positive examples have a common feature and the negative examples have a common feature, the parameters of the encoder 43 can be adjusted so that outputs from the encoder 43 during inputting of image data having a common feature to the machine training model 40 become close.

In the contrast training, the information processing apparatus 100 trains the encoder 43 so that outputs from the encoder 43 during inputting of the positive and negative examples become farther. Since features of the positive and negative examples are not similar to each other, the parameters of the encoder 43 can be adjusted so that outputs from the encoder 43 during inputting of image data having different features to the machine training model 40 become farther.

The information processing apparatus 100 infers the region of the person, the region of the object, and the action of the person on the object by inputting the image data captured by the camera 30 to the backbone 41 of the machine training model 40. For example, as described with reference to FIG. 1, the camera 30 is installed in a store that has a product shelf on which products are stored, and image data (video data) captured by the camera 30 includes a region of the product shelf. Therefore, when the information processing apparatus 100 inputs the image data to the backbone 41 of the machine training model 40, an action of the customer taking out a product from the product shelf can be identified.

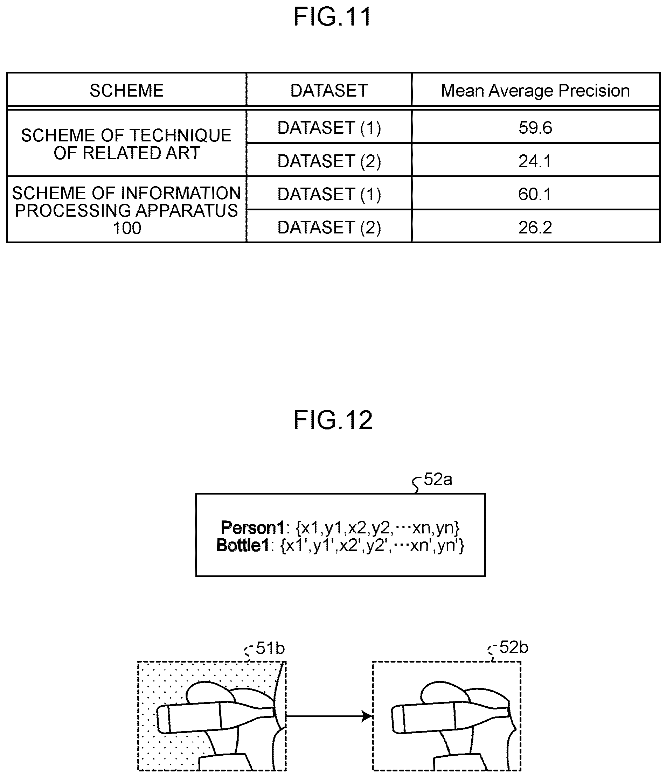

Here, a result of the mean average precision of a scheme of the information processing apparatus 100 compared with a scheme of the technique of the related art will be described. FIG. 11 is a diagram illustrating a result of accuracy evaluation. A dataset (1) is a public dataset in which images of people holding objects are collected in various scenes. A dataset (2) is a closed dataset in which images people reaching for products at a store are collected.

In the scheme of the technique of the related art, accuracy evaluation for the dataset (1) was "59.6", and accuracy evaluation for the dataset (2) was "24.1". On the other hand, in the information processing apparatus 100, the accuracy evaluation for the dataset (1) was "60.1", and the accuracy evaluation for the dataset (2) was "26.2". That is, for both datasets, it can be seen that the accuracy evaluation of the scheme of the information processing apparatus 100 is higher than that of the scheme of the technique of the related art.

Content of the process of the above-described information processing apparatus 100 and content of a data structure of each piece of data are exemplary. For example, in the annotation data 52 described with reference to FIG. 3, the region 51a of the person is indicated by the coordinates of an upper left end and the coordinates of a lower right end, and the region 51b of the object is indicated by the coordinates of an upper left end and the coordinates of a lower right end, but the present invention is not limited thereto. For example, as illustrated in FIG. 12, the annotation data may be extended.

FIG. 12 is a diagram illustrating an extension example of annotation data. In the annotation data 52a illustrated in FIG. 12, a plurality of coordinates tracking the contour of a person is set. In the annotation data 52a, a plurality of coordinates on the contour of the object is set. For example, the region 51b of the object can be extracted in the annotation data 52 described in FIG. 3, whereas the contour 52b of the object can be extracted in the annotation data 52a. The region 51b of the object includes a region that is not an object, but the contour 52b of the object includes an image of only an object. Accordingly, the image of the object to be combined with the combined image data can be an image of the object itself.

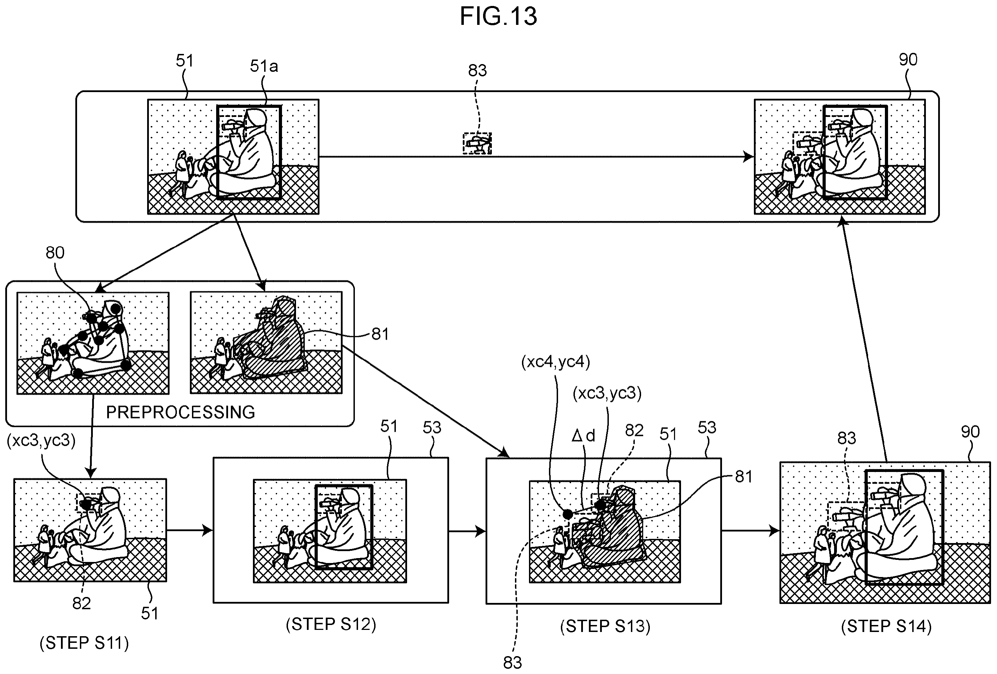

Although the generation unit 152 of the information processing apparatus 100 generates the combined image data by executing the process described in FIG. 4, the process of generating the combined image data is not limited thereto. For example, the generation unit 152 of the information processing apparatus 100 may execute the process illustrated in FIG. 13 to generate the combined image data.

FIG. 13 is a diagram illustrating another process of generating combined image data. The generation unit 152 of the information processing apparatus 100 executes, as preprocessing, a process of extracting skeleton data from the region 51a of the person and a process of extracting segmentation of the person.

An example of a process in which the generation unit 152 extracts skeleton data from the region 51a of the person will be described. The generation unit 152 infers skeleton data 80 of the person by inputting the region 51a of the person of the image data 51 to a skeleton inference model. The skeleton inference model is a trained model and is a model that accepts image data of a region of the person as an input and outputs skeleton data of the person. The skeleton inference model is a neural network (NN) or the like.

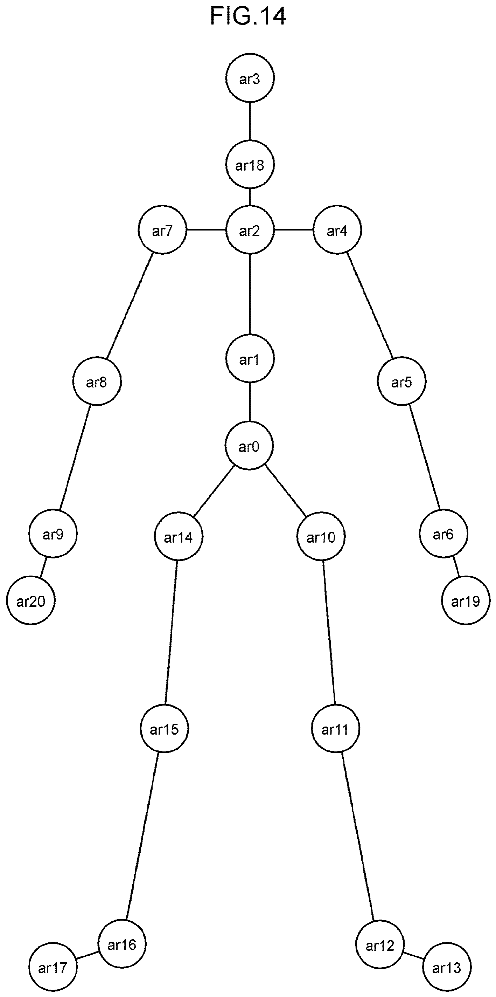

The skeleton data is data in which two-dimensional or three-dimensional coordinates are set for a plurality of joints defined by a skeleton model of a human body. Here, the coordinates of each joint of the skeleton data are two-dimensional coordinates. FIG. 14 is a diagram illustrating an example of a skeleton model of a human body. For example, as illustrated in FIG. 14, the skeleton model of the human body is defined by twenty one joints ar0 to ar20.

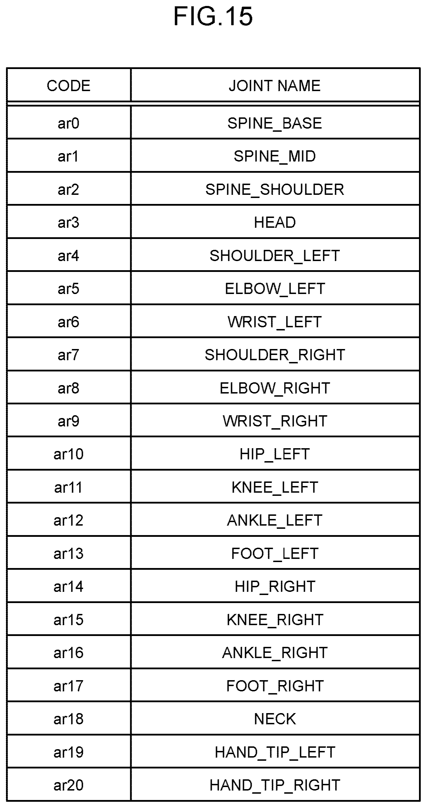

A relationship between the joints ar0 to ar20 illustrated in FIG. 14 and joint names is illustrated in FIG. 15. FIG. 15 is a diagram illustrating examples of joint names. For example, a joint name of the joint ar0 is "SPINE_BASE". Joint names of the joints ar1 to a20 are illustrated in FIG. 15, and the description thereof will be omitted.

A process in which the generation unit 152 extracts segmentation of a person will be described. The generation unit 152 collects regions for each group having similar features (color, texture, and a subject) in the image data 51 and divides the regions into a plurality of regions by executing segmentation on the image data 51. The generation unit 152 compares the plurality of divided regions with the region 51a of the person specified with the annotation data, and extracts a region most overlapping the region 51a of the person among the plurality of regions as the region of the person. In the example illustrated in FIG. 13, the generation unit 152 extracts a region 81 as a region of the person.

The generation unit 152 generates the combined image data 90 by executing the above preprocessing and then executing the processes of steps S11 to S14.

Step S11 will be described. The generation unit 152 specifies coordinates (xc3, yc3) of an action point based on the skeleton data 80. For example, the generation unit 152 specifies the coordinates of the joint ar19 of a left wrist among the joints ar0 to ar20 included in the skeleton data 80 as the coordinates of the action point. The generation unit 152 specifies a region of a predetermined range based on the coordinates (xc3, yc3) of the action point as the region 82 of the object. The generation unit 152 may compare the region of the object specified with the annotation data with the joint ar20 of the right wrist and the joint ar19 of the left wrist, and specify the coordinates of the joint of the wrist close to the region of the object as the coordinates of the action point.

Step S12 will be described. The generation unit 152 generates image data 53 by generating a margin around the image data 51.

Step S13 will be described. The generation unit 152 copies an image of the region 82 of the object included in the image data 51. The copied image is referred to as an image 83. The generation unit 152 arranges the copied image 83 in a region not covered with the region 81 of the person. Further, the generation unit 152 adjusts coordinates of the image 83 so that the distance $\Delta d$ between the coordinates (xc3, yc3) of the action point of the region 82 of the object and coordinates (xc4, yc4) of the upper left corner of the arranged image 83 becomes a hyperparameter set in advance.

Step S4 will be described. The generation unit 152 generates the combined image data 90 by deleting a margin of the image data 53.

As described with reference to FIG. 13, the information processing apparatus 100 generates the combined image data 90 obtained by combining the image data 51 and the image 83 by executing the preprocessing and executing the processes of steps S11 to S14.

(Second Embodiment)

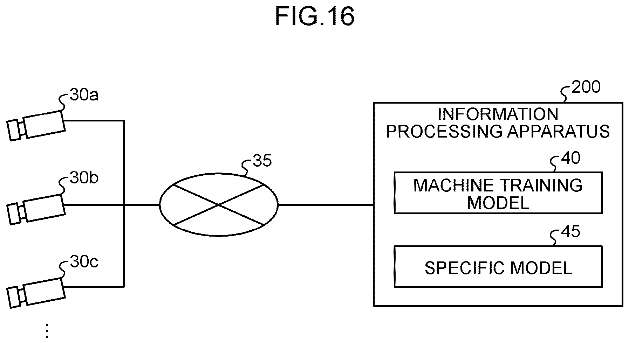

Next, an example of a system according to a second embodiment will be described. FIG. 16 is a diagram illustrating an example of a system according to the second embodiment. As illustrated in FIG. 1, the system includes cameras 30a, 30b, and 30c, and an information processing apparatus 200. The cameras 30a to 30c and the information processing apparatus 200 are connected to each other via a network 35.

The cameras 30a to 30c are installed in a store that has product shelves in which products are stored. The cameras 30a to 30c capture videos including product shelves installed in a store, and transmit data of the captured videos to the information processing apparatus 200. In the following description, the data of the videos is referred to as "video data". The video data includes time-series image data (still images). The cameras 30a to 30c are collectively referred to as the "cameras 30".

The information processing apparatus 200 executes various types of processes using the machine training model 40. In addition to the processes of the information processing apparatus 100 described above, the information processing apparatus 200 generates training data for training the machine training model 40 based on the video data received from the cameras 30.

For example, the information processing apparatus 200 specifies a region of a person, a region of a product that is a target of an action of the person, and an action of the person on the product by sequentially inputting time-series image data included in the video data acquired from the cameras 30 to the specific model 45. The specific model 45 is a machine training model that outputs the region of the person, the region of the product that is the target of the action of the person, and the action of the person on the product when image data is input, and is a trained machine training model. For example, the specific model 45 is an HOID or the like.

The information processing apparatus 200 specifies image data satisfying a predetermined condition by repeatedly executing the above processes. The predetermined condition is a condition that the region of the product that is the target of the action of the person is included in the region of the product shelf, and the action of the person on the product is "holding". Even when a part of the region of the product that is the target of the action of the person is included in the region of the product shelf, it may be determined that the region of the product that is the target of the action of the person is included in the region of the product shelf. The action of the person is described as "holding" here, but an administrator may set another action.

The information processing apparatus 200 analyzes the region of the product of the image data that satisfies the predetermined condition, and identifies a type of product. The type of product is an electrical appliance, a detergent, food, a book, cosmetics, or the like. The information processing apparatus 200 may identify the type of the product included in the region of the product using the specific model 45.

The information processing apparatus 200 specifies the image data satisfying the predetermined condition from the time-series image data, and generates training data based on the specified image data. As described in FIG. 3, the training data includes image data and annotation data. The information processing apparatus 200 sets image data satisfying the predetermined condition as image data of training data. The information processing apparatus 200 generates annotation data of training data based on the region of the person, the region of the product that is a target of an action of the person, an action of the person on the product, and a type of product that are output when image data satisfying the predetermined condition is input to the specific model 45.

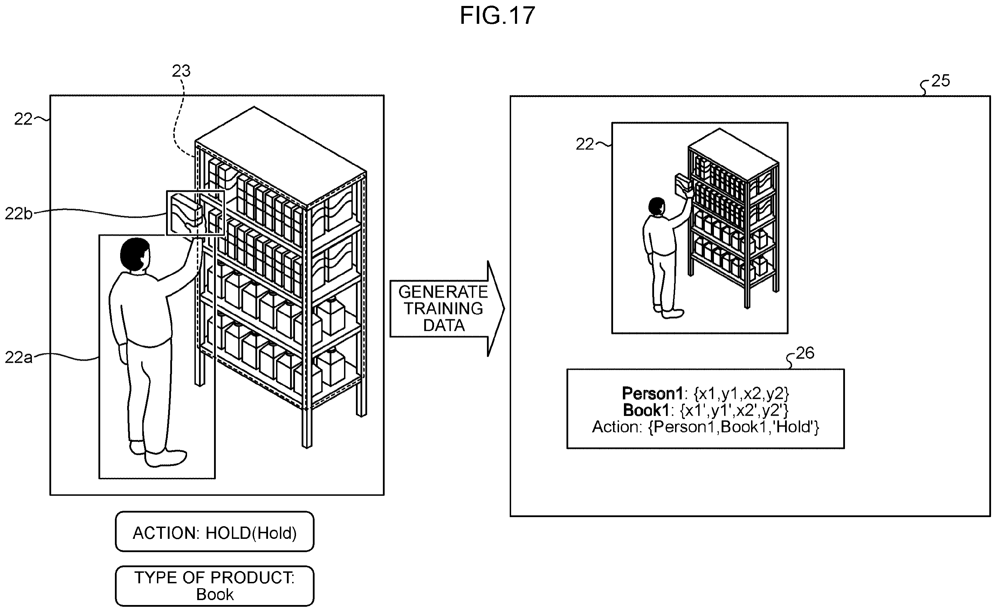

FIG. 17 is a diagram illustrating a process of the information processing apparatus according to the second embodiment. The image data illustrated in FIG. 17 is image data satisfying the predetermined condition. For example, the information processing apparatus 200 inputs an image data 22 to the specific model 45 and specifies the region 22a of the person, the region 22b of the product that is the target of the action of the person, and an action "holding" of the person on the product. The information processing apparatus 200 specifies a type "book" of a product included in the region 22b of the product. The region 22b of the product (a part of the region 22b) is included in the region of the product shelf 23. Therefore, the information processing apparatus 200 specifies the image data 22 as image data satisfying the predetermined condition.

The information processing apparatus 200 generates training data 25 based on information extracted from the image data 22. The information processing apparatus 200 sets the image data 22 as image data of the training data 25. The information processing apparatus 200 sets "Person1: {x1, y1, x2, y2}" in annotation data 26 based on the region 22a of the person. Coordinates of an upper left end of the region 22a of the person are "x1, y1", and coordinates of a lower right end of the region 22a of the person are "x2, y2".

The information processing apparatus 200 sets "Book1: {x1', y1', x2', y2'}" in the annotation data 26 based on the region 22b of the product and the type of product "Book". It is indicated that the coordinates of the upper left end of the region 22b of the object are "x1', y1'" and the coordinates of the lower right end of the region 22b of the object are "x2', y2'".

The information processing apparatus 200 sets "Action: {Person1, Book1, Hold}" in the annotation data 26 based on the type of product and the action of the person "holding" the product. This indicates that the person in the region 22a holds the object (Book) in the region 22b.

The information processing apparatus 200 generates a plurality of pieces of training data by repeatedly executing the above process on image data satisfying the predetermined condition. The information processing apparatus 200 trains the machine training model 40 based on the generated training data. The process in which the information processing apparatus 200 trains the machine training model 40 based on the training data is similar to the process in which the information processing apparatus 100 according to the first embodiment trains the machine training model 40. For example, the information processing apparatus 200 executes the process of generating the combined image data described in the first embodiment, the process in the training phase, and the process in the inference phase.

As described above, the information processing apparatus 200 according to the second embodiment acquires the video data (time-series image data) from the camera 30 and specifies the region of the person, the region of the product that is the target of the action of the person, and the action of the person on the product by inputting the time-series image data to the specific model 45. The information processing apparatus 200 specifies, among the plurality of pieces of image data, image data that satisfies a condition that a region of a product that is a target of an action of a person is included in a region of a product shelf, and an action of the person on the product is "holding". The information processing apparatus 200 generates training data based on the specified image data and trains the machine training model 40 based on the generated training data. Accordingly, it is possible to generate the machine training model that accurately estimates on which object an action of a person is performed with respect to image data including many similar objects.

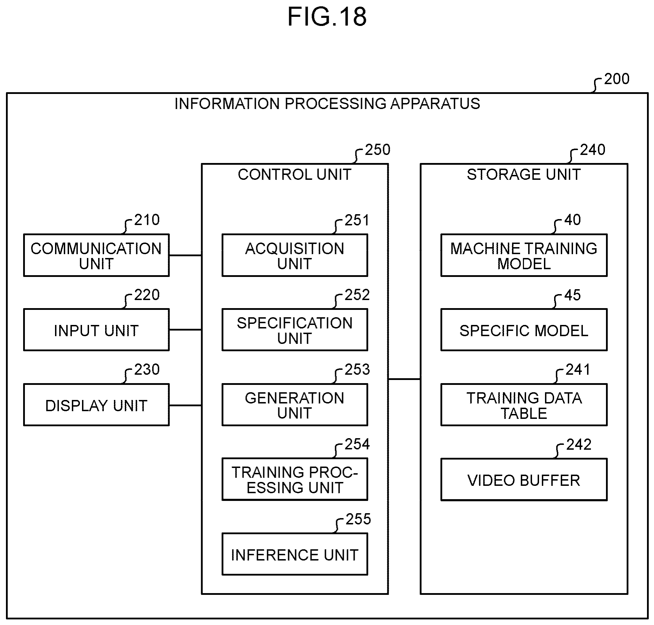

Next, a configuration example of the information processing apparatus 200 that executes the above-described processing will be described. FIG. 18 is a functional block diagram illustrating a configuration of the information processing apparatus according to the second embodiment. As illustrated in FIG. 18, the information processing apparatus 200 includes a communication unit 210, an input unit 220, a display unit 230, a storage unit 240, and a control unit 250.

The description regarding the communication unit 210, the input unit 220, and the display unit 230 is similar to the description regarding the communication unit 110, the input unit 120, and the display unit 130 described in FIG. 8.

The storage unit 140 includes a machine training model 40, a specific model 45, a training data table 241, and a video buffer 242. The storage unit 140 is a storage device such as a memory.

The machine training model 40 is a transformer-based machine training model. For example, the machine training model 40 is an HOID. The description regarding the machine training model 40 is similar to the description regarding the machine training model 40 described in FIG. 2.

The specific model 45 is a transformer-based machine training model and is a trained machine training model. For example, the specific model 45 is an HOID. When the image data is input, the specific model 45 outputs the region of the person, the region of the product that is the target of the action of the person, and the action of the person on the product. The specific model 45 may further output the type of product included in the region of the product.

The training data table 241 is a table that retains a plurality of pieces of training data. A data structure of the training data table 241 is similar to the data structure of the training data table 141 described with reference to FIG. 9. For example, the training data table 241 includes item numbers, image data, annotation data, and combined image data. A pair of image data and the annotation data corresponds to the training data. The training data set in the training data table 241 includes training data prepared in advance and training data generated by the process described in FIG. 17.

The video buffer 242 is a buffer that stores video data captured by the camera 30. The video buffer 242 may store identification information of the camera and the video data in association.

The description returns to FIG. 18. The control unit 250 includes an acquisition unit 251, a specification unit 252, a generation unit 253, a training processing unit 254, and an inference unit 255. The control unit 250 is a central processing unit (CPU), a graphics processing unit (GPU), or the like.

The acquisition unit 251 acquires video data from the cameras 30, and stores the acquired video data in the video buffer 242. The acquisition unit 251 may acquire data of the training data table 241 from an external apparatus or the like and store the data in the storage unit 240.

The specification unit 252 acquires video data (time-series image data) captured by the cameras 30 from the video buffer 242, and generates training data based on the acquired image data. The specification unit 252 registers the generated training data in the training data table 241. Hereinafter, an example of a processing procedure of the specification unit 252 will be described.

The specification unit 252 inputs the image data to the training data table 241, acquires the region of the person, the region of the product that is the target of the action of the person, and the action of the person on the product, and specifies the image data satisfying the predetermined condition. The predetermined condition is a condition that the region of the product that is the target of the action of the person is included in the region of the product shelf, and the action of the person on the product is "holding".

The specification unit 252 generates training data based on image data satisfying the predetermined condition. A process in which the specification unit 252 generates the training data based on the image data is similar to the process described with reference to FIG. 17. For example, the specification unit 252 sets image data satisfying the predetermined condition as training data. The specification unit 252 generates annotation data based on an output result when the image data satisfying the predetermined condition is input to the specific model 45. An output result of the specific model 45 includes the region of the person, the region of the product that is the target of the action of the person, and the action of the person on the product.

The specification unit 252 generates a plurality of pieces of training data by repeatedly executing the above process on image data satisfying the predetermined condition, and stores the generated training data in the training data table 241. A process of the specification unit 252 is assumed to be executed at a stage before the generation unit 253, the training processing unit 254, and the inference unit 255 execute processes.

The generation unit 253 generates combined image data based on the image data included in the training data table 241. A process in which the generation unit 253 generates the combined image data is similar to the process of the generation unit 152 described in the first embodiment.

The training processing unit 254 trains the machine training model 40 using the training data table 241. A process in which the training processing unit 254 trains the machine training model 40 is similar to the process of the training processing unit 153 described in the first embodiment.

The inference unit 255 infers on which object the action of the person is performed using the machine training model 40 trained by the training processing unit 254. A process in which the inference unit 255 infers on which object an action of a person is performing using the machine training model 40 is similar to the process of the inference unit 154 described in the first embodiment.

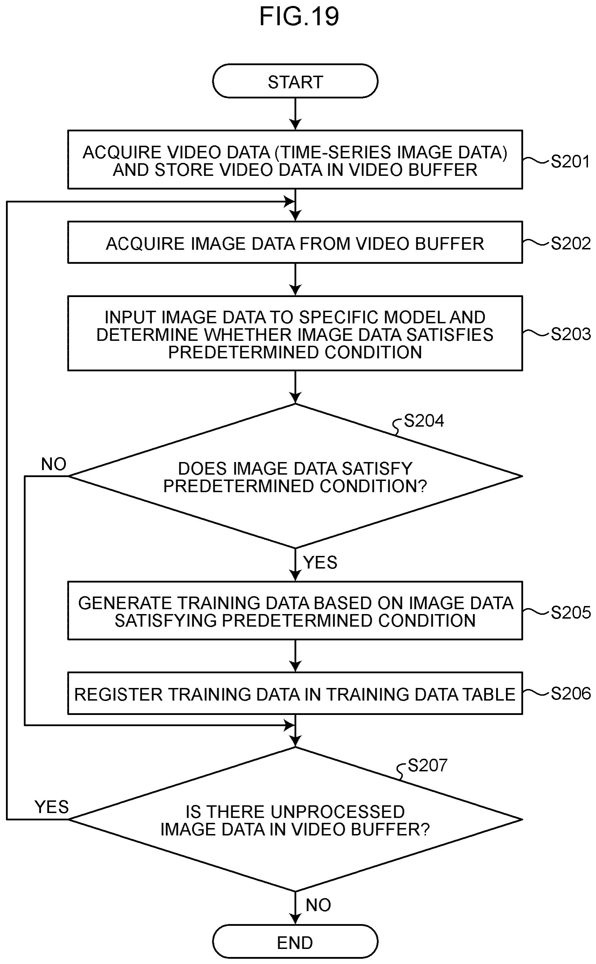

Next, an example of a processing procedure of the information processing apparatus according to the second embodiment will be described. FIG. 19 is a flowchart illustrating a processing procedure of the information processing apparatus according to the second embodiment. In FIG. 19, a processing procedure in which the specification unit 252 generates training data from image data will be described. As illustrated in FIG. 19, the acquisition unit 251 of the information processing apparatus 200 acquires video data (time-series image data) from the cameras 30 and stores the video data in the video buffer 242 (step S201).

The specification unit 252 of the information processing apparatus 200 acquires the image data from the video buffer 242 (step S202). The specification unit 252 inputs the image data to the specific model 45 and determines whether the image data satisfies a predetermined condition (step S203).

When the image data does not satisfy the predetermined condition (No in step S204), the specification unit 252 moves to step S207. Conversely, when the image data satisfies the predetermined condition (Yes in step S204), the specification unit 252 moves to step S205.

The specification unit 252 generates training data based on the image data satisfying the predetermined condition (step S205). The specification unit 252 registers the training data in the training data table 241 (step S206).

The specification unit 252 determines whether there is unprocessed image data in the video buffer 242 (step S207). When there is the unprocessed image data in the video buffer 242 (Yes in step S207), the specification unit 252 moves to step S202. Conversely, when there is no unprocessed image data in the video buffer 242 (No in step S207), the specification unit 252 ends the process.

For example, after the process of FIG. 19 is executed, the information processing apparatus 200 executes the process of FIG. 10 in the same way as that of the information processing apparatus 100 according to the first embodiment.

Next, effects of the information processing apparatus 200 according to the second embodiment will be described. The information processing apparatus 200 specifies the region of the person, the region of the product that is the target of the action of the person, and the action of the person on the product by acquiring the video data (time-series image data) from the camera 30 and inputting the time-series image data to the specific model 45. The information processing apparatus 200 specifies, among the plurality of pieces of image data, image data that satisfies a condition that a region of a product that is a target of an action of a person is included in a region of a product shelf, and an action of the person on the product is "holding". The information processing apparatus 200 generates training data based on the specified image data and trains the machine training model 40 based on the generated training data. Accordingly, it is possible to generate the machine training model that accurately estimates on which object an action of a person is performed with respect to image data including many similar objects. The information processing apparatus 200 can automatically generate a plurality of pieces of training data based on time-series image data captured by the cameras 30.

The information processing apparatus 200 analyzes the region of the product of the image data satisfying the predetermined condition, specifies a type of product, sets the annotation data as the training data, and executes the machine training of the machine training model 40 using the training data. Accordingly, it is possible to cause the machine training model 40 to train an action of taking out a specific product among a plurality of types of products.

The content of the process of the information processing apparatus 200 according to the above-described second embodiment is exemplary. The information processing apparatus 200 inputs the image data to the specific model 45 and specifies the action of the person on the product, but the present invention is not limited thereto. For example, the information processing apparatus 200 may generate time-series skeleton data from the time-series image data and specify the region of the person based on the time-series skeleton data.

For example, the specification unit 252 of the information processing apparatus 200 inputs image data to the specific model 45 and specifies a region of the person. The information processing apparatus 200 infers the skeleton data by inputting the image of the region of the person included in the image data to the skeleton inference model described in the first embodiment. The specification unit 252 repeatedly executes the above process on each piece of image data.

The specification unit 252 compares transition of a position of the wrist of the time-series skeleton data with a rule table and specifies the action of the person. The rule table stores data in which the transition of the position of the wrist is associated with a type of action. The specification unit 252 may estimate the type of action of the person further using presence or absence of an object at the position of the wrist.

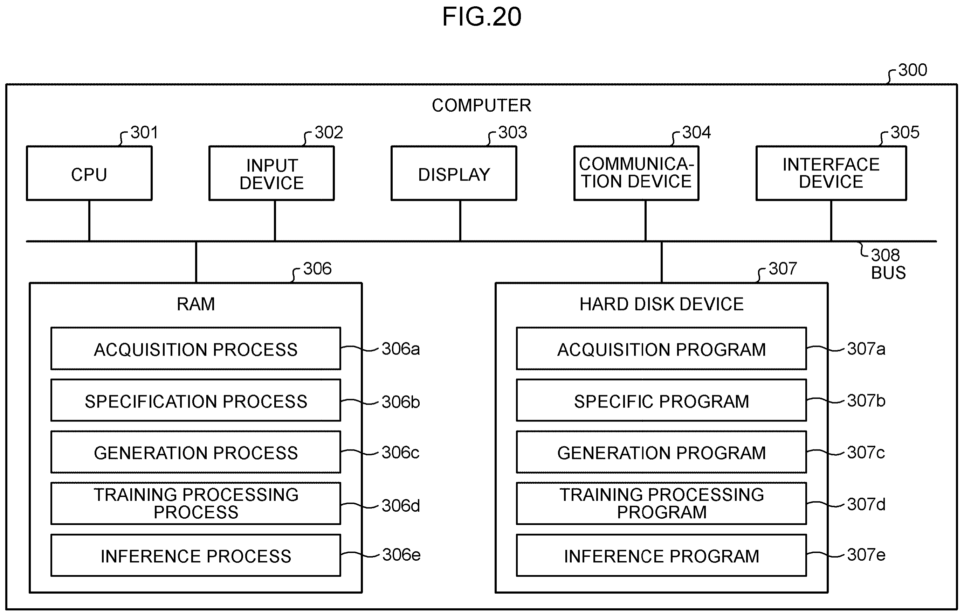

Next, an example of a hardware configuration of a computer that implements functions similar to those of the above-described information processing apparatuses 100 and 200 will be described. FIG. 20 is a diagram illustrating an example of a hardware configuration of a computer that implements functions similar to those of the information processing apparatus according to an embodiment.

As illustrated in FIG. 20, a computer 300 includes a CPU 301 that executes various types of arithmetic processes, an input device 302 that accepts an input of data from a user, and a display 303. The computer 300 includes a communication device 304 that exchanges data with an external apparatus or the like via a wired or wireless network, and an interface device 305. The computer 300 includes a RAM 306 that temporarily stores various types of information and a hard disk device 307. The devices 301 to 307 are connected to a bus 308.

The hard disk device 307 includes an acquisition program 307a, a specific program 307b, a generation program 307c, a training processing program 307d, and an inference program 307e. The CPU 301 reads the programs 307a to 307e and loads the programs in the RAM 306.

The acquisition program 307a functions as an acquisition process 306a. The specific program 307b functions as a specification process 306b. The generation program 307c functions as a generation process 306c. The training processing program 307d functions as a training processing process 306d. The inference program 307e functions as an inference process 306e.

A process of the acquisition process 306a corresponds to processes of the acquisition units 151 and 251. A process of the specification process 306b corresponds to a process of the specification unit 252. A process of the generation process 306c corresponds to processes of the generation units 152 and 253. A process of the training processing process 306d corresponds to processes of the training processing units 153 and 254. A process of the inference process 306e corresponds to processes of the inference units 154 and 255.

The programs 307a to 307e are not necessarily stored in the hard disk device 307 from the beginning. For example, each program is stored in a "portable physical medium" such as a flexible disk (FD), a CD-ROM, a DVD, a magneto-optical disc, or an IC card inserted into the computer 300. Then, the computer 300 may read and execute the programs 307a to 307e.

Reference Signs List

    40 MACHINE TRAINING MODEL
    45 SPECIFIC MODEL
    100, 200 INFORMATION PROCESSING APPARATUS
    110, 210 COMMUNICATION UNIT
    120, 220 INPUT UNIT
    130, 230 DISPLAY UNIT
    140, 240 STORAGE UNIT
    141, 241 TRAINING DATA TABLE
    142, 242 VIDEO BUFFER
    150, 250 CONTROL UNIT
    151, 251 ACQUISITION UNIT
    152, 253 GENERATION UNIT
    153, 254 TRAINING PROCESSING UNIT
    154, 255 INFERENCE UNIT
    252 SPECIFICATION UNIT

**Claims**

1. A generation program causing a computer to execute a process comprising:

    acquiring a video obtained by imaging an area including a product shelf on which products are arranged;
    specifying an action of a person holding the product by analyzing the acquired video;
    specifying an image frame including a product stored on the product shelf and a product held by the person from a plurality of image frames that form the acquired video based on the specified action of the person holding the product; and
    generating a machine training model trained to identify a person performing an action of taking out the product from the product shelf using the specified image frame.

2. The generation program according to claim 1, wherein the process further includes:

    acquiring a video obtained by imaging an area including a product shelf on which a plurality of types of products are arranged;
    specifying a specific product held by the person based on the action of the person on the product specified in the specifying of the action;
    specifying an image frame including a product stored on the product shelf and the specific product held by the person from a plurality of image frames that form the acquired video based on the action of the person on the product specified in the specifying of the action; and
    generating a machine training model trained to identify a person performing an action of taking out the specific product from the product shelf using the specified image frame.

3. The generation program according to claim 1, wherein the process further includes:

extracting an image of the product held by the person from the image frames specified in the specifying of the image frames; and

generating a combined image in which the extracted image of the product is arranged at a predetermined position in the image frame,

wherein the generating the machine training model includes generating the machine training model trained to identify a person performing an action of taking out the product from the product shelf using the combined image.

4. The generation program according to claim 3, wherein the generating the combined image includes:

receiving a setting of a parameter based on a distance between a coordinate position of the person and a coordinate position of an object held by the person;

generating coordinate positions of arrangement candidates of the extracted image of the object based on the set parameter;

determining whether the generated coordinate position is included in a region related to a size of an object; and

generating a combined image in which an image of the object is arranged in the acquired image based on the determined result.

5. The generation program according to claim 1, wherein the process further includes identifying an action of the person taking out a product from the product shelf by inputting a video that is a video including the person and the product shelf on which the product is stored and is an image captured by a camera in a store to the machine training model.

6. The generation program according to claim 1, wherein the process further includes generating skeleton information of the person by analyzing the video acquired in the acquiring of the video, and

wherein the specifying the action includes specifying an action of the person holding the product based on the skeleton information.

7. An inference program causing a computer to execute a process comprising:

specifying a machine training model trained to identify a person performing an action of taking out a product from a product shelf using an image frame including the product stored on the product shelf and the product held by the person, the image frame being extracted from a plurality of image frames that form a video, based on an action of the person holding the product, the action being specified by analyzing the video obtained by imaging an area including the product shelf on which the product is arranged; and

identifying a person performing an action of taking out the product from the product shelf using the specified machine training model.

8. A generation method carried out by a computer, comprising:

acquiring a video obtained by imaging an area including a product shelf on which products are arranged;

specifying an action of a person holding the product by analyzing the acquired video;

specifying an image frame including the product stored on the product shelf and a product held by the person from a plurality of image frames that form the acquired video based on the specified action of the person holding the product; and

generating a machine training model trained to identify a person performing an action of taking out the product from the product shelf using the specified image frame.

9. The generation method according to claim 8, wherein

the acquiring includes acquiring a video obtained by imaging an area including a product shelf on which a plurality of types of products are arranged;

the specifying the specific product includes specifying a specific product held by the person based on the action of the person on the product specified in the specifying of the action;

the specifying the image frame includes specifying an image frame including a product stored on the product shelf and the specific product held by the person from a plurality of image frames that form the acquired video based on the action of the person on the product specified in the specifying of the action; and

the generating includes generating a machine training model trained to identify a person performing an action of taking out the specific product from the product shelf using the specified image frame.

10. The generation method according to claim 8,
    wherein the generation method further includes:

    extracting an image of the product held by the person from the image frames specified in the specifying of the image frames; and
    generating a combined image in which the extracted image of the product is arranged at a predetermined position in the image frame,
    wherein the generating the machine training model includes the machine training model trained to identify a person performing an action of taking out the product from the product shelf is generated using the combined image.

11. The generation method according to claim 10,
    wherein the generating the combined image includes:

    receiving a setting of a parameter based on a distance between a coordinate position of the person and a coordinate position of an object held by the person;
    generating coordinate positions of arrangement candidates of the extracted image of the object based on the set parameter; and
    determining whether the generated coordinate position is included in a region related to a size of an object; and
    generating a combined image in which an image of the object is arranged in the acquired image based on the determined result.

12. The generation method according to claim 8, wherein the generation method further includes identifying an action of the person taking out a product from the product shelf by inputting a video that is a video including the person and the product shelf on which the product is stored and is an image captured by a camera in a store to the machine training model.

13. The generation method according to claim 8, wherein the generation method further includes generating skeleton information of the person by analyzing the video acquired in the acquiring of the video, and
    wherein the specifying includes specifying the action of the person holding the product is specified based on the skeleton information.

14. An information processing apparatus including a control unit configured to execute a process comprising:

    acquiring a video obtained by imaging an area including a product shelf on which products are arranged;
    specifying an action of a person holding the product by analyzing the acquired video;
    specifying an image frame including the product stored on the product shelf and a product held by the person from a plurality of image frames that form the acquired video based on the specified action of the person holding the product; and
    generating a machine training model trained to identify a person performing an action of taking out the product from the product shelf using the specified image frame.

15. The information processing apparatus according to claim 14, wherein

    the acquiring includes acquiring a video obtained by imaging an area including a product shelf on which a plurality of types of products are arranged, and
    the specifying the specific product includes specifying a specific product held by the person based on the action of the person on the product specified in the specifying of the action, and
    wherein the processor is further configured to:

        specify an image frame including a product stored on the product shelf and the specific product held by the person from a plurality of image frames that form the acquired video based on the action of the person on the product specified in the specifying of the action; and
        generate a machine training model trained to identify a person performing an action of taking out the specific product from the product shelf using the specified image frame.

16. The information processing apparatus according to claim 14,
    wherein the process further includes:

extracting an image of the product held by the person from the image frames specified in the specifying of the image frames; and

generating a combined image in which the extracted image of the product is arranged at a predetermined position in the image frame,

wherein the generating the machine training model includes generating the machine training model trained to identify a person performing an action of taking out the product from the product shelf using the combined image.

17. The information processing apparatus according to claim 16,
wherein the generating the combined image includes:

receiving a setting of a parameter based on a distance between a coordinate position of the person and a coordinate position of an object held by the person;

generating coordinate positions of arrangement candidates of the extracted image of the object based on the set parameter; and

determining whether the generated coordinate position is included in a region related to a size of an object; and generating a combined image in which an image of the object is arranged in the acquired image based on the determined result.

18. The information processing apparatus according to claim 14, wherein the process further includes identifying an action of the person taking out a product from the product shelf by inputting a video that is a video including the person and the product shelf on which the product is stored and is an image captured by a camera in a store to the machine training model.

19. The information processing apparatus according to claim 14, wherein the process further includes generating skeleton information of the person by analyzing the video acquired in the acquiring of the video, and
the specifying includes specifying an action of the person holding the product based on the skeleton information.

FIG.1

# FIG.2

EP 4 723 023 A1

# FIG.3

50

51

52

Person1: {x1,y1,x2,y2}
Bottle1: {x1',y1',x2',y2'}
Action: {Person1,Bottle1,'Hold'}

(x1',y1')
51b
(x1,y1)
51a
(x2',y2')
(x2,y2)

FIG.4

# FIG.5

# FIG.6

EP 4 723 023 A1

FIG.7

# FIG.8

# FIG.9

| ITEM NUM-BER | IMAGE DATA | ANNOTATION DATA | COMBINED IMAGE DATA |
|---|---|---|---|
| 1 | IMAGE DATA WITH ITEM NUMBER 1 | ANNOTATION DATA WITH ITEM NUMBER 1 | COMBINED IMAGE DATA GENERATED FROM IMAGE DATA WITH ITEM NUMBER 1 |
| 2 | IMAGE DATA WITH ITEM NUMBER 2 | ANNOTATION DATA WITH ITEM NUMBER 2 | COMBINED IMAGE DATA GENERATED FROM IMAGE DATA WITH ITEM NUMBER 2 |
| 3 | IMAGE DATA WITH ITEM NUMBER 3 | ANNOTATION DATA WITH ITEM NUMBER 3 | COMBINED IMAGE DATA GENERATED FROM IMAGE DATA WITH ITEM NUMBER 3 |
| 4 | IMAGE DATA WITH ITEM NUMBER 4 | ANNOTATION DATA WITH ITEM NUMBER 4 | COMBINED IMAGE DATA GENERATED FROM IMAGE DATA WITH ITEM NUMBER 4 |
| ... | ... | ... | ... |

# FIG.10

START

↓

GENERATE COMBINED IMAGE DATA BASED ON IMAGE DATA OF TRAINING DATA TABLE — S101

↓

INPUT PAIR OF POSITIVE AND POSITIVE EXAMPLES, PAIR OF POSITIVE AND NEGATIVE EXAMPLES, OR PAIR OF NEGATIVE EXAMPLES TO Backbone OF MACHINE TRAINING MODEL, AND EXTRACT FEATURES — S102

↓

INPUT EACH FEATURE TO Encoder AND CALCULATE EACH OUTPUT f() — S103

↓

CALCULATE CROSS ENTROPY ERROR RELATED TO CONTRAST TRAINING FOR EACH OUTPUT f() — S104

↓

CALCULATE LOSS BASED ON RESULT OUTPUT FROM Decoder AND ANNOTATION DATA BY INPUTTING POSITIVE EXAMPLE TO Backbone OF MACHINE TRAINING MODEL — S105

↓

TRAIN MACHINE TRAINING MODEL SO THAT TOTAL ERROR OBTAINED BY ADDING CROSS-ENTROPY ERROR TO Bounding Box Loss, Object Category Loss, AND Action Loss IS REDUCED — S106

↓

END

# FIG.11

| SCHEME | DATASET | Mean Average Precision |
|---|---|---|
| SCHEME OF TECHNIQUE OF RELATED ART | DATASET (1) | 59.6 |
| | DATASET (2) | 24.1 |
| SCHEME OF INFORMATION PROCESSING APPARATUS 100 | DATASET (1) | 60.1 |
| | DATASET (2) | 26.2 |

# FIG.12

52a

**Person1**: {x1,y1,x2,y2,···xn,yn}
**Bottle1**: {x1',y1',x2',y2',···xn',yn'}

51b

52b

# FIG.13

PREPROCESSING

(STEP S11)

(STEP S12)

(STEP S13)

(STEP S14)

# FIG.14

# FIG.15

| CODE | JOINT NAME |
|------|-----------|
| ar0 | SPINE_BASE |
| ar1 | SPINE_MID |
| ar2 | SPINE_SHOULDER |
| ar3 | HEAD |
| ar4 | SHOULDER_LEFT |
| ar5 | ELBOW_LEFT |
| ar6 | WRIST_LEFT |
| ar7 | SHOULDER_RIGHT |
| ar8 | ELBOW_RIGHT |
| ar9 | WRIST_RIGHT |
| ar10 | HIP_LEFT |
| ar11 | KNEE_LEFT |
| ar12 | ANKLE_LEFT |
| ar13 | FOOT_LEFT |
| ar14 | HIP_RIGHT |
| ar15 | KNEE_RIGHT |
| ar16 | ANKLE_RIGHT |
| ar17 | FOOT_RIGHT |
| ar18 | NECK |
| ar19 | HAND_TIP_LEFT |
| ar20 | HAND_TIP_RIGHT |

# FIG.16

# FIG.17

GENERATE TRAINING DATA

ACTION: HOLD(Hold)

TYPE OF PRODUCT: Book

Person1: {x1,y1,x2,y2}
Book1: {x1',y1',x2',y2'}
Action: {Person1,Book1,'Hold'}

EP 4 723 023 A1

# FIG.18

INFORMATION PROCESSING APPARATUS ⌐200

CONTROL UNIT ⌐250

COMMUNICATION UNIT ⌐210

INPUT UNIT ⌐220

DISPLAY UNIT ⌐230

ACQUISITION UNIT ⌐251

SPECIFICATION UNIT ⌐252

GENERATION UNIT ⌐253

TRAINING PROCESSING UNIT ⌐254

INFERENCE UNIT ⌐255

STORAGE UNIT ⌐240

MACHINE TRAINING MODEL ⌐40

SPECIFIC MODEL ⌐45

TRAINING DATA TABLE ⌐241

VIDEO BUFFER ⌐242

# FIG.19

```
                    ┌─────────┐
                    │  START  │
                    └────┬────┘
                         │
                         ▼
  ┌──────────────────────────────────────────────┐
  │ ACQUIRE VIDEO DATA (TIME-SERIES IMAGE DATA)   │  S201
  │ AND STORE VIDEO DATA IN VIDEO BUFFER          │
  └──────────────────────┬───────────────────────┘
                         │
                         ▼
  ┌──────────────────────────────────────────────┐
  │ ACQUIRE IMAGE DATA FROM VIDEO BUFFER          │  S202
  └──────────────────────┬───────────────────────┘
                         │
                         ▼
  ┌──────────────────────────────────────────────┐
  │ INPUT IMAGE DATA TO SPECIFIC MODEL AND        │  S203
  │ DETERMINE WHETHER IMAGE DATA SATISFIES        │
  │ PREDETERMINED CONDITION                       │
  └──────────────────────┬───────────────────────┘
                         │
                         ▼
                      S204
              DOES IMAGE DATA SATISFY        NO
              PREDETERMINED CONDITION?
                         │
                        YES
                         ▼
  ┌──────────────────────────────────────────────┐
  │ GENERATE TRAINING DATA BASED ON IMAGE DATA    │  S205
  │ SATISFYING PREDETERMINED CONDITION            │
  └──────────────────────┬───────────────────────┘
                         │
                         ▼
  ┌──────────────────────────────────────────────┐
  │ REGISTER TRAINING DATA IN TRAINING DATA TABLE │  S206
  └──────────────────────┬───────────────────────┘
                         │
                         ▼
                      S207
       YES    IS THERE UNPROCESSED
              IMAGE DATA IN VIDEO BUFFER?
                         │
                        NO
                         ▼
                    ┌─────────┐
                    │   END   │
                    └─────────┘
```

# FIG.20

EP 4 723 023 A1

# FIG.21

FIG.22

# FIG.23

ACTION: HOLD

ACTION: HOLD

# FIG.24

**EP 4 723 023 A1**

## INTERNATIONAL SEARCH REPORT

| International application No. |
|---|
| **PCT/JP2023/019983** |

| A. | CLASSIFICATION OF SUBJECT MATTER |
|---|---|

*G06Q 50/10*(2012.01)i
FI:  G06Q50/10

According to International Patent Classification (IPC) or to both national classification and IPC

| B. | FIELDS SEARCHED |
|---|---|

Minimum documentation searched (classification system followed by classification symbols)

G06Q50/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2017-102574 A (FUJITSU LIMITED) 08 June 2017 (2017-06-08) | 1-3, 5, 7-10, 12, 14-16, 18 |
| | paragraphs [0034]-[0063], fig. 5, 7 | |
| Y | paragraphs [0034]-[0063], fig. 5, 7 | 6, 13, 19 |
| A | paragraphs [0034]-[0063], fig. 5, 7 | 4, 11, 17 |
| Y | JP 2021-39662 A (TOSHIBA TEC KABUSHIKI KAISHA) 11 March 2021 (2021-03-11) paragraph [0047] | 6, 13, 19 |
| A | WO 2022/024367 A1 (NEC CORPORATION) 03 February 2022 (2022-02-03) entire text, all drawings | 1-19 |
| A | JP 2021-107989 A (CANON MARKETING JAPAN INC.) 29 July 2021 (2021-07-29) entire text, all drawings | 1-19 |
| A | JP 2019-211891 A (KONICA MINOLTA, INC.) 12 December 2019 (2019-12-12) entire text, all drawings | 1-19 |
| A | JP 2023-20726 A (FUJITSU LIMITED) 09 February 2023 (2023-02-09) entire text, all drawings | 1-19 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 June 2023** | **11 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 723 023 A1

## INTERNATIONAL SEARCH REPORT

International application No.

**PCT/JP2023/019983**

### C. DOCUMENTS CONSIDERED TO BE RELEVANT

| Category* | Citation of document, with indication, where appropriate, of the relevant passages | Relevant to claim No. |
|---|---|---|
| A | JP 2018-200531 A (FUJITSU LIMITED) 20 December 2018 (2018-12-20) entire text, all drawings | 1-19 |

Form PCT/ISA/210 (second sheet) (January 2015)

40

**INTERNATIONAL SEARCH REPORT**
Information on patent family members

International application No.

**PCT/JP2023/019983**

| Patent document cited in search report | | | Publication date (day/month/year) | Patent family member(s) | | | Publication date (day/month/year) |
|---|---|---|---|---|---|---|---|
| JP | 2017-102574 | A | 08 June 2017 | (Family: none) | | | |
| JP | 2021-39662 | A | 11 March 2021 | US<br>paragraph [0063]<br>EP<br>CN | 2021/0073554<br><br>3789977<br>112446280 | A1<br><br>A1<br>A | |
| WO | 2022/024367 | A1 | 03 February 2022 | (Family: none) | | | |
| JP | 2021-107989 | A | 29 July 2021 | (Family: none) | | | |
| JP | 2019-211891 | A | 12 December 2019 | (Family: none) | | | |
| JP | 2023-20726 | A | 09 February 2023 | US<br>entire text, all drawings<br>EP | 2023/0031073<br><br>4125067 | A1<br><br>A1 | |
| JP | 2018-200531 | A | 20 December 2018 | US<br>entire text, all drawings | 2018/0342077 | A1 | |

Form PCT/ISA/210 (patent family annex) (January 2015)

**EP 4 723 023 A1**

**Patent documents cited in the description**

- JP 2018015408 A